# EUROPEAN PATENT APPLICATION

(11) **EP 2 840 249 A1**
(43) Date of publication of application: **25.02.2015**
(21) Application number: 14179773.8
(22) Date of filing: 04.08.2014
(51) Int. Cl.: F02D 41/12, F02D 23/00, F02B 37/12, F04D 27/02, F02D 11/10, F02D 37/02, F02P 5/04

(54) **Control method and control system for internal combustion engine with turbocharger**

(30) Priority: 15.08.2013 CN 201310355169; 23.01.2014 US 201414162385
(71) Applicant: Honeywell International Inc., Morristown, NJ 07962-2245 (US)
(72) Inventor: Shao, Dezhi, Morristown, NJ New Jersey 07962-2245 (US); Gu, Ronglei, Morristown, NJ New Jersey 07962-2245 (US); Wang, James, Morristown, NJ New Jersey 07962-2245 (US)
(74) Representative: Houghton, Mark Phillip

(57) **Abstract**

The present invention provides engine control including antisurge control (30) capable of receiving a boost pressure of an engine turbocharger, receiving an engine speed, and looking up a static control parameter lookup table according to the engine speed and boost pressure so as to select a control parameter indicating the air flow requirement (32). The selected control parameter is sent to an engine control unit (60) so as to control the engine using the air flow requirement indicated by said control parameter.

## Description

### TECHNICAL FIELD

The present invention relate generally to an engine control technology and, more particularly, to a method and system for providing improved engine control.

### BACKGROUND OF THE INVENTION

Gasoline and natural gas engines have been a dominant mode of providing propulsion for numerous types of vehicles for many years. As such, innovations aimed at improving gasoline and natural gas engine performance in areas such as power and efficiency have continued to be desirable goals. A turbocharger is one example of an innovation that has improved gasoline engine performance. The turbocharger may be thought of as a gas compressor used to increase the mass of air entering the engine to create more engine power. Thus, the turbocharger is an air compressor that is driven by exhaust gases generated by operation of an internal combustion engine, which can increase the air flow entering into the internal combustion engine or boiler, thereby improving machine efficiency. The turbocharger is usually used in a car engine to increase the horsepower output of the internal combustion engine by using the heat and flow of the exhaust gases.

On gasoline and natural gas turbocharged engines, a potential problem of compressor surge exists in situations where the throttle is closed. Such situations may be particularly noticeable when the throttle is closed from an initially substantially open position. In this regard, when the throttle is closed, compressed air will flow to the throttle, but will have no exit due to the closure of the throttle. The compressed air may then decompress back across the turbocharger (causing the "surge"), which may be the only path the now blocked air can take. The surge can raise the pressure of the air to a level that can cause engine damage or undesirable noise due to turbulence.

In order to prevent or at least reduce the impact of compressor surge, turbocharged engines typically include a device such as a recirculation valve. The device operates to provide air between the turbocharger and the throttle valve with a flow path when the throttle is closed, which vents off the excess air pressure, to maintain the turbo spinning at a safe area. The air is usually recycled back into the turbocharger inlet when using a recirculation valve, but can also be vented to the atmosphere when using a blowoff valve. By providing an escape air path, engine damage and noise may be avoided as well as reduction of the phenomenon of turbo lag due to slowing down of the turbo that may take place as a result of a surge.

For a turbocharger, surge is an unstable operating condition and is thus not good. Surge is a kind of physical restriction and cannot be completely avoided by the turbocharger *per se.* When the turbocharger is mounted on an engine/vehicle, it may enter a surge area under a specific operating condition. Although the recirculation valve or blowoff valve may be effective at preventing surge conditions, the recirculation valve does not typically provide improvement in engine power or efficiency, but still adds to cost and complexity of the engine. Accordingly, it may be desirable to provide a mechanism for avoiding use of the recirculation valve.

### SUMMARY OF THE INVENTION

An object of the present invention is to remove the compressor recirculation valve by modifying the ECU software. The method of the present invention uses a measurable signal (e.g. atmospheric pressure, boost pressure, engine speed, etc.) as input and then looks up a table to obtain the air flow requirement. Said air flow requirement can be converted into other relevant parameters so as to enable the engine controller to provide corresponding control. Said method enables the turbocharger to continuously work in a safe area without using any additional hardware.

According to one embodiment of the present invention, an engine control method is provided. For each duty cycle of the engine, said method comprises: receiving a boost pressure of an engine turbocharger, receiving an engine speed; looking up a static control parameter lookup table according to the engine speed and boost pressure so as to select a control parameter indicating the air flow requirement; and sending the selected control parameter to an engine control unit so as to control the engine using the air flow requirement indicated by said control parameter.

According to another embodiment of the present invention, an engine control system is provided, which comprises: a gasoline or natural gas engine; a turbocharger combined with said engine; an engine control unit which comprises an antisurge control module and is configured to control at least some actuators associated with the engine and turbocharger, wherein, said antisurge control module comprises a parameter pre-processing module configured to receive a boost pressure of the turbocharger; a control parameter lookup table module including a static control parameter lookup table and configured to receive the engine speed and look up the static control parameter lookup table according to the engine speed and the boost pressure from the parameter pre-processing module so as to select a control parameter indicating the air flow requirement; and a control parameter processing module configured to send the selected control parameter to the engine control unit so as to control the engine using the air flow requirement indicated by said control parameter.

By making the method of the present invention to be a part of the engine control software (process), the turbocharged engine is able to not enter the "surge" area. Compared to the existing dominant methods, the method of the present invention removes the hardware and has a better performance. The method of the present invention can reduce system cost, reduce turbo design complexity so that the turbo can be better standardized and be better packaged in vehicles, and reduce the risk of turbo failure. By means of the method of the present invention, such hardware as the recirculation valve or blowoff valve is removed, so development of software only needs to be done once for all applications, which reduces the period for calibration of one application to, for example, two months. Since the risk of mechanical failure is removed, better reliability is achieved.

### BRIEF DESCRIPTION OF THE DRAWINGS

Having thus described the invention in general terms, reference will now be made to the accompanying drawings, which are not necessarily drawn to scale, and wherein:
FIG 1 is a schematic block diagram of a system according to an exemplary embodiment of the present invention;
FIG. 2 illustrates a block diagram showing an apparatus for providing an antisurge operating mode for a turbocharged engine according to an exemplary embodiment of the present invention;
FIG. 3 illustrates a block diagram showing an engine control module, an antisurge control module as well as communication therebetween according to an exemplary embodiment of the present invention;
FIG. 4 is a flowchart according to a method of providing an antisurge operating mode for a turbocharged engine according to an exemplary embodiment of the present invention.

### DETAILED DESCRIPTION OF THE DRAWINGS

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein. Like reference numerals refer to like elements throughout. In the detailed descriptions below, the embodiments are described in sufficient detail to enable those skilled in the art to implement the invention. It shall be understood that other embodiments can be used without departing from the scope of the present invention. Therefore, the following detailed descriptions should not be understood in a restrictive way.

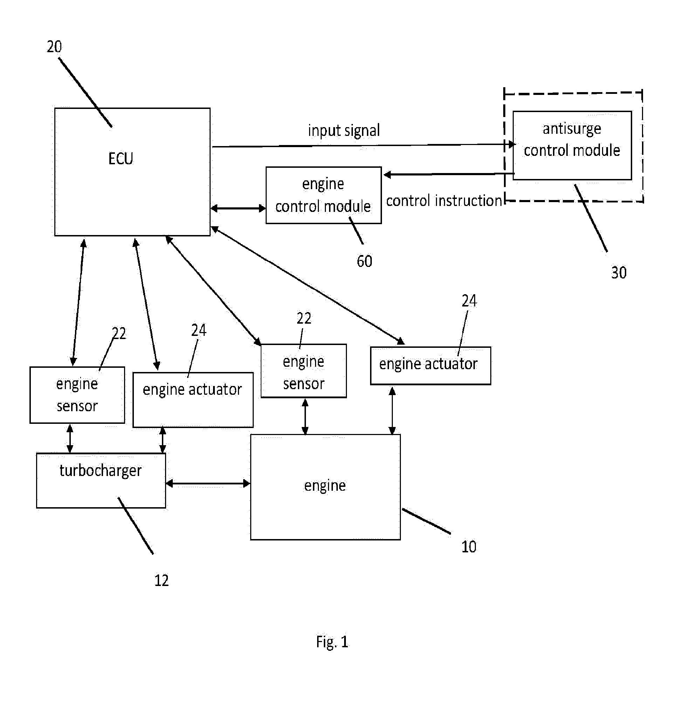

Referring now to FIG. 1, a schematic block diagram showing certain elements of a system including an engine control unit according to an exemplary embodiment of the present invention is provided. However, FIG. 1 is illustrative of one exemplary embodiment, and it should be understood that other architectures including additional or even fewer elements may also be employed in connection with practicing embodiments of the present invention. The system includes an engine 10, which may be a gasoline engine or a natural gas engine. The engine 10 may be operable to be combined with a turbocharger 12 so as to be in operable communication with the turbocharger 12.

The system may also include an engine control unit (ECU) 20. The ECU 20 is an electronic control unit that may include hardware and/or software components configured to control various aspects of engine operation. In particular, the ECU 20 may receive inputs from various engine sensors 22 and control various engine actuators 24. The engine sensors 22 may be disposed at various points in the engine 10 to measure or otherwise determine corresponding engine parameters. Examples of engine sensors 22 may include a throttle position sensor, air temperature sensor, engine revolutions per minute (RPM) sensor, engine load sensor, accelerator pedal position sensor and/or other sensors. The engine actuators 24 may include various relays, solenoids, ignition coils, or other electrically operable devices that may be used to control corresponding engine parameters.

In an exemplary embodiment, the ECU 20 may also be in communication with other sensors and actuators associated with a vehicle in which the engine 10 is disposed. In some cases, the ECU 20 may be in communication with one or more turbo sensors 26 (e.g., turbocharger wastegate position) and/or one or more turbo actuators 28. As such, the ECU 20 may receive information on engine parameters from any of the sensors with which the ECU 20 has communication and provide control parameters to any of the actuators with which the ECU 20 has communication.

In an exemplary embodiment, the ECU 20 may further include an antisurge control module 30. The antisurge control module 30 may be any means such as a device or circuitry embodied in hardware, software or a combination of hardware and software that is configured to perform the corresponding functions of the antisurge control module 30 as described herein. In some embodiments, the antisurge control module 30 may be configured to augment ECU 20 capabilities with respect to surge prevention by identifying engine conditions under which action is to be taken for antisurge activity and with respect to taking or directing actions (e.g., via control of various engine actuators 24 and/or turbo actuators 28) with respect to antisurge activity. Thus, in an exemplary embodiment, the antisurge control module 30 may merely provide additional functionality to the ECU 20. However, in some embodiments, the antisurge control module 30 may directly provide such functionality itself. As such, as an alternative to the exemplary embodiment of FIG. 1 in which the ECU 20 controls the engine actuators 24 and/or turbo actuators 28 and receives information from the engine sensors 22 and/or turbo sensors 26, the antisurge control module 30 may have direct communication with some or all of the engine actuators 24 and/or turbo actuators 28 and the engine sensors 22 and/or turbo sensors 26 in some cases.

Accordingly, embodiments of the present invention may employ the antisurge control module 30 to prevent or reduce the impact of surge in response to throttle closing after the operation of substantially opening the throttle. Furthermore, the use of the antisurge control module 30 may enable the engine 10 to be produced without a recirculation valve or other diversion device aimed at limiting or preventing surge.

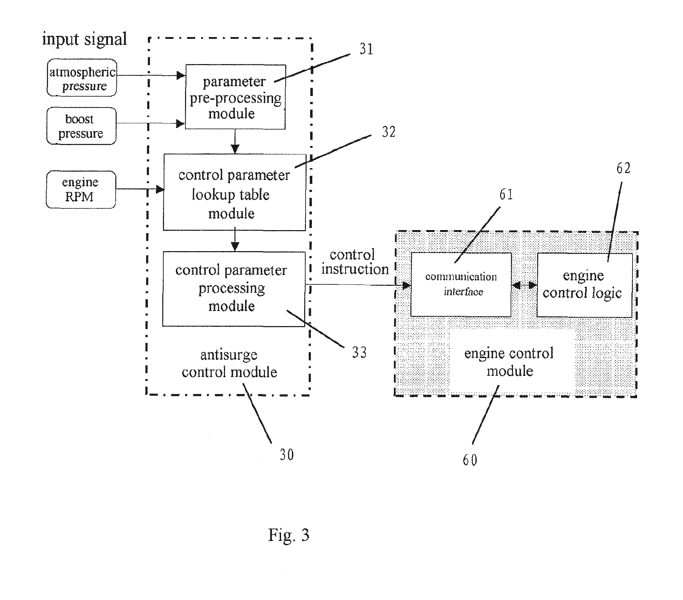

The system may further include an engine control module 60 which will form an engine control model under the antisurge mode according to a control instruction from the antisurge control module 30. Communication between the engine control module 60 and the antisurge control module 30 will be described in detail in Fig. 3.

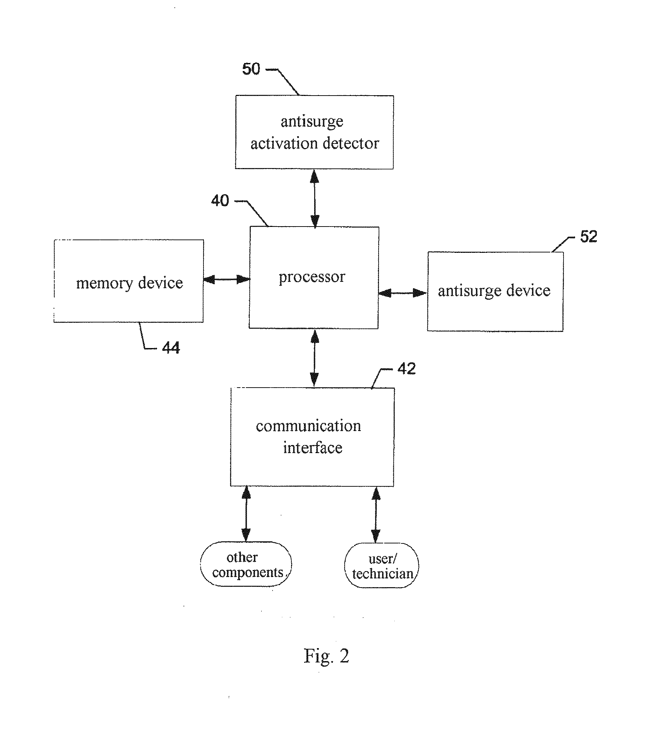

FIG. 2 shows a block diagram view of one example of an apparatus configured to perform exemplary embodiments of the present invention. However, it should be noted that an apparatus for enabling engine control for anti-surge operation (e.g., in the absence of a recirculation or air diversion valve for such purpose) need not include all of the devices shown in FIG. 2 and could, in some cases, include more or different modules. Moreover, the apparatus may be embodied entirely at a single device (e.g., the antisurge control module 30) or may be embodied at a combination of devices (e.g., in some cases, some of the components shown in FIG. 2 may be portions of the ECU 20, while others are portions of the antisurge control module 30). As such, the embodiment of FIG 2 is merely provided to be exemplary of some possible embodiments that may employ the present invention.

In an exemplary embodiment, the apparatus may include or otherwise be in communication with a processor 40, a communication interface 42 and a memory device 44. The memory device 44 may include, for example, volatile and/or non-volatile memory. The memory device 44 may be configured to store information, data, applications, modules, instructions or the like for enabling the apparatus to carry out various functions in accordance with exemplary embodiments of the present invention. For example, the memory device 44 could be configured to buffer input data for processing by the processor 40. Additionally or alternatively, the memory device 44 could be configured to store instructions corresponding to an application for execution by the processor 40.

The processor 40 may be a processor of the ECU 20 or a co-processor or processor of the antisurge control module 30. The processor 40 may be embodied in a number of different ways. For example, the processor 40 may be embodied as a processing element, a coprocessor, a controller or various other processing means or devices including integrated circuits such as an ASIC (application specific integrated circuit), FPGA (field programmable gate array) a hardware accelerator or the like. In an exemplary embodiment, the processor 40 may be configured to execute instructions stored in the memory device 44 or otherwise accessible to the processor 40. As such, whether configured by hardware or software methods, or by a combination thereof, the processor 40 may represent an entity capable of performing operations according to embodiments of the present invention while configured accordingly. Thus, for example, when the processor 40 is embodied as an ASIC, FPGA or the like, the processor 40 may be specifically configured hardware for conducting the operations described herein. Alternatively, as another example, when the processor 40 is embodied as an executor of software instructions, the instructions may specifically configure the processor 40, which may otherwise be a general purpose processing element if not for the specific configuration provided by the instructions, to perform the algorithms and/or operations described herein. However, in some cases, the processor 40 may be a processor of a specific device (e.g., the ECU 20) adapted for employing embodiments of the present invention by further configuration of the processor 40 by instructions for performing the algorithms and/or operations described herein (e.g., by addition of the antisurge control module 30).

Meanwhile, the communication interface 42 may be any means such as a device or circuitry embodied in either hardware, software, or a combination of hardware and software that is configured to receive and/or transmit data from/to sensors, actuators, or other devices or modules in communication with the apparatus (e.g., the engine actuators 24 and/or turbo actuators 28 and the engine sensors 22 and/or turbo sensors 26). In this regard, the communication interface 42 may include, for example, supporting wiring, circuitry, hardware and/or software for enabling communications with vehicles and/or engine components. In some environments, the communication interface 42 may include a communication port for receiving information from a user interface and/or a communication port for enabling dialog equipment to be placed into communication with the ECU 20.

In an exemplary embodiment, the processor 40 may be embodied as, include or otherwise control an antisurge activation detector 50 and an antisurge device 52. The antisurge activation detector 50 and the antisurge device 52 may each be any means such as a device or circuitry embodied in hardware, software or a combination of hardware and software that is configured to perform the corresponding functions of the antisurge activation detector 50 and the antisurge device 52, respectively. The antisurge activation detector 50 and the antisurge device 52 may, in some cases, define the antisurge control module 30 or be portions thereof along with some or all of the other components in FIG. 2. In situations where the antisurge activation detector 50 and the antisurge device 52 define the antisurge control module 30, the communication interface 42 may communicate with a communication interface of the ECU 20 and may provide information to and receive information from the actuators, sensors and other devices of the engine 10 and/or turbocharger 12. In embodiments where the communication interface 42 is also a portion of the antisurge control module 30, the communication interface 42 may be in communication with the ECU 20 to provide information to and receive information from the actuators, sensors and other devices of the engine 10 and/or turbocharger 12, as appropriate, via the ECU 20.

The antisurge activation detector 50 may be configured to detect situations in which antisurge operations are to be implemented. As such, the antisurge activation detector 50 may be configured to monitor engine parameters in order to determine whether the parameters are indicative of conditions that would otherwise potentially cause a surge. In response to detection of conditions that would otherwise potentially cause the surge, the antisurge activation detector 50 may be configured to activate antisurge operation by activating the antisurge device 52.

The antisurge device 52 may be configured to employ data recorded for a predetermined time period prior to the activation of antisurge operation triggered by the antisurge activation detector 50 to control engine parameters for surge prevention. In an exemplary embodiment, the antisurge device 52 may provide control signals to the engine actuators 24 and/or turbo actuators 28 to switch from a normal operating condition to antisurge operation. The control of the engine actuators 24 and/or turbo actuators 28 may, for example, include control of wastegate setposition, throttle position, injection rate and/or ignition angle.

FIG. 3 illustrates a block diagram showing an engine control module, an antisurge control module as well as communication therebetween according to an exemplary embodiment of the present invention. The antisurge control module 30 comprises a parameter pre-processing module 31, a control parameter lookup table module 32 and a control parameter processing module 33. The control parameter lookup table module 32 includes a static lookup table which includes, for example, control parameters generated according to experience. The static lookup table can be very easily calibrated. For example, the control parameter indicating the air flow requirement included in the static lookup table can be modified according to the engine pressure and/or temperature. The engine inlet pressure and/or engine inlet temperature for modification are from the pressure or temperature at a specific position in the turbocharger related area, such as the pressure or temperature at a certain position in an inlet pipe. The control parameter indicating the air flow requirement may be a physical parameter related to the air flow, such as a throttle position, an intake manifold pressure, etc., or a control parameter representing indirect air flow requirement, such as a torque, etc. Each parameter in the control parameter lookup table module 32 corresponds to a control instruction. The parameter pre-processing module 31 receives input relating to the engine operation parameters, e.g. the boost pressure or other parameters such as the atmospheric pressure, from ECU 20. The parameter pre-processing module 31 looks up the control parameter lookup table according to the input parameter (e.g. boost pressure and/or atmospheric pressure) as well as the engine speed (rpm) so as to obtain a control instruction corresponding to said parameter. In a specific embodiment, for each duty cycle of the engine, the parameter pre-processing module 31 receives the boost pressure and/or atmospheric pressure of the turbocharger of the engine and can process the atmospheric pressure and boost pressure into a pressure ratio or a similar form. In one embodiment, the boost pressure can be replaced with a pressure of any pipe between the turbocharger compressor outlet and the engine cylinder. In one embodiment, the atmospheric pressure can be replaced with a pressure of any pipe between the vehicle inlet and the compressor inlet, such as the compressor front pressure. The control parameter lookup table module 32 receives the engine speed and looks up the static control parameter lookup table according to the engine speed and the boost pressure from the parameter pre-processing module 31 so as to select the control parameter indicating the air flow requirement. In a preferred embodiment, the static control parameter lookup table is looked up according to the engine speed, the boost pressure and the atmospheric pressure or a combination of the latter two (such as a pressure ratio) so as to select the control parameter indicating the air flow requirement. The control parameter lookup table module 32 sends the selected control parameter to a control parameter processing module 33 for further processing. In an exemplary embodiment, the control parameter processing module 33 considers an ideal air flow requirement determined according to the accelerator pedal position of the turbocharged engine and the vehicle speed as an air flow requirement 1, and considers the air flow requirement from the control instruction of the antisurge control module 30 and reflecting the current engine state as an air flow requirement 2. The control parameter processing module 33 compares the ideal air flow requirement 1 and the air flow requirement 2. If the air flow requirement 1 is greater than the air flow requirement 2, the air flow requirement 1 is added into the engine control model, otherwise, the air flow requirement 2 is added. The control parameter processing module 33 can also convert the parameter indicating the air flow requirement into parameters of other forms. The control parameter processing module 33 includes the processed parameter indicating the air flow requirement or parameters of other forms in the control instruction and sends said control instruction to an engine control module 60, so that said engine control module 60 controls the engine using the air flow requirement indicated by said control parameter or parameters of other forms. In a preferred embodiment, the control parameter processing module 33 sends an instruction of opening the exhaust bypass valve while sending the selected control parameter.

The engine control module 60 includes a communication interface 61 and an engine control logic 62. The communication interface 61 receives from the antisurge control module 30 a control instruction including the selected control parameter, and provides the control instruction to the engine control logic 62 which generates an engine control model according to the control instruction.

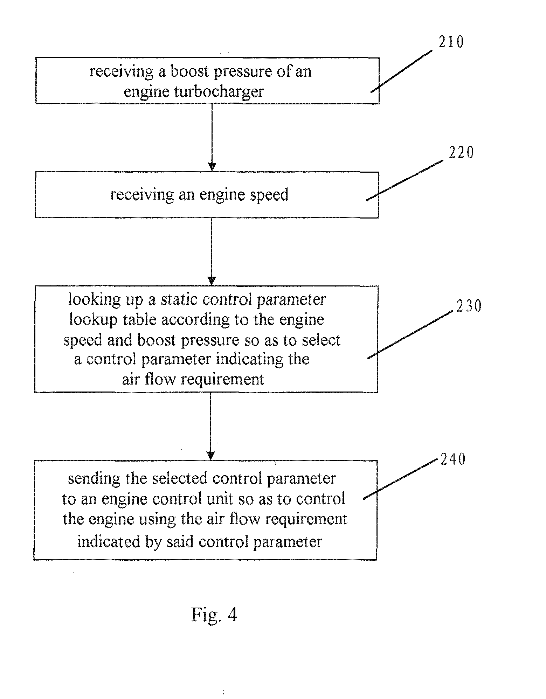

FIG. 4 is a flowchart according to a method of providing an antisurge operating mode for a turbocharged engine according to an exemplary embodiment of the present invention. It will be understood that each block or step of the flowchart, and combinations of blocks in the flowchart, can be implemented by various means, such as hardware, firmware, and/or software including one or more computer program instructions. For example, one or more of the procedures described above may be embodied by computer program instructions. In this regard, the computer program instructions which embody the procedures described above may be stored by a memory device (e.g., memory device 46) and executed by a processor (e.g., processor 40). As will be appreciated, any such computer program instructions may be loaded onto a computer or other programmable apparatus (i.e., hardware) to produce a machine, such that the instructions which execute on the computer or other programmable apparatus create means for implementing the functions specified in the flowchart block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowchart block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowchart block(s) or step(s).

Accordingly, blocks or steps of the flowchart support combinations of means for performing the specified functions, combinations of steps for performing the specified functions and program instruction means for performing the specified functions. It will also be understood that one or more blocks or steps of the flowchart, and combinations of blocks or steps in the flowchart, can be implemented by special purpose hardware-based computer systems which perform the specified functions or steps, or combinations of special purpose hardware and computer instructions.

In this regard, for each duty cycle of the engine, the engine control method as provided in FIG. 4 includes receiving a boost pressure (210) of the engine turbocharger; receiving an engine speed (220); looking up a static control parameter lookup table according to the engine speed and boost pressure so as to select a control parameter (230) indicating the air flow requirement; and sending the selected control parameter to an engine control unit so as to control the engine (240) using the air flow requirement indicated by said control parameter.

In an exemplary embodiment, an apparatus for performing the method above may include a processor (e.g., the processor 40) configured to perform each of the operations (200-240) described above. The processor may, for example, be configured to perform the operations by executing stored instructions or an algorithm for performing each of the operations. Alternatively, the apparatus may include means for performing each of the operations described above. In this regard, according to an exemplary embodiment, examples of means for performing operations 200 to 240 may include, for example, the antisurge activation detector 50, the antisurge device 52, or the processor 40.

The present invention can be embodied in other specific forms without departing the substantive characteristics thereof. In all aspects, the embodiments are only illustrative but not restrictive. Thus the scope of the present invention is defined by the appended claims instead of the above descriptions. All variations made in the sense and scope of equivalents of the claims shall be included in the scope of the present invention.

## Claims

1. An engine control method, which comprises, for each duty cycle of the engine:
receiving a boost pressure of an engine turbocharger;
receiving an engine speed;
looking up a static control parameter lookup table according to the engine speed and boost pressure so as to select a control parameter indicating the air flow requirement; and
sending the selected control parameter to an engine control unit so as to control the engine using the air flow requirement indicated by said control parameter.

2. The engine control method according to claim 1, further comprising: sending an instruction of opening the exhaust bypass valve while sending the selected control parameter.

3. The engine control method according to claim 1, wherein a compressor front pressure is also used when looking up the static control parameter lookup table.

4. The engine control method according to claim 3, comprising processing the boost pressure and the compressor front pressure into a pressure ratio.

5. The engine control method according to claim 1, further comprising modifying the control parameter indicating the air flow requirement according to the engine inlet pressure and/or engine inlet temperature.

6. The engine control method according to claim 5, wherein the engine inlet pressure and/or engine inlet temperature for modification are from the pressure or temperature at a specific position in the turbocharger related area.

7. The engine control method according to claim 6, wherein the turbocharger related area includes an inlet pipe.

8. The engine control method according to claim 1, wherein the boost pressure includes a pressure of a pipe between the turbocharger compressor outlet and the engine cylinder.

9. The engine control method according to claim 1, wherein the parameter indicating the air flow requirement includes a parameter related to the air flow.

10. The engine control method according to claim 9, wherein the parameter related to the air flow includes a throttle position, an intake manifold pressure and a torque.

11. The engine control method according to claim 1, further comprising that the selected control parameter is sent to an engine control unit after one or more of the following processings:
comparing said control parameter to the control parameter generated by the engine control system to select the one that indicate a larger air flow;
converting the air flow requirement parameter into one or more engine parameters that are of a different type from said control parameter; and
processing said control parameter using an accelerator pedal and/or vehicle speed.

12. An engine control system, comprising:
a gasoline or natural gas engine;
a turbocharger combined with said engine;
an engine control unit, which comprises: an antisurge control module and is configured to control at least some actuators associated with the engine and turbocharger, wherein, said antisurge control module comprises:
a parameter pre-processing module configured to receive a boost pressure of the turbocharger;
a control parameter lookup table module including a static control parameter lookup table and configured to receive the engine speed and look up the static control parameter lookup table according to the engine speed and the boost pressure from the parameter pre-processing module so as to select a control parameter indicating the air flow requirement; and
a control parameter processing module configured to send the selected control parameter to the engine control unit so as to control the engine using the air flow requirement indicated by said control parameter.

13. The engine control system according to claim 12, wherein the antisurge control module is configured to send an instruction of opening the exhaust bypass valve while sending the selected control parameter.

14. The engine control system according to claim 12, wherein a compressor front pressure is also used when looking up the static control parameter lookup table.

15. The engine control system according to claim 12, wherein the parameter pre-processing module is further configured to process the boost pressure and the compressor front pressure into a pressure ratio.

16. The engine control system according to claim 12, wherein the control parameter lookup table module is further configured to modify the control parameter indicating the air flow requirement according to the engine inlet pressure and/or engine inlet temperature.

17. The engine control system according to claim 16, wherein the engine inlet pressure and/or engine inlet temperature for modification are from the pressure or temperature at a specific position in the turbocharger related area.

18. The engine control system according to claim 17, wherein the turbocharger related area includes an inlet pipe.

19. The engine control system according to claim 12, wherein the boost pressure includes a pressure of a pipe between the turbocharger compressor outlet and the engine cylinder.

20. The engine control system according to claim 12, wherein the parameter indicating the air flow requirement includes a parameter related to the air flow.

21. The engine control system according to claim 20, wherein the parameter related to the air flow includes a throttle position, an intake manifold pressure and a torque.

22. The engine control system according to claim 12, wherein the control parameter processing module is further configured to process the selected control parameter according to one or more of the following processings, and send the processed control parameter to the engine control unit:
comparing said control parameter to the control parameter generated by the engine control system to select the one that indicate a larger air flow;
converting the air flow requirement parameter into one or more engine parameters that are of a different type from said control parameter; and
processing said control parameter using an accelerator pedal and/or vehicle speed.
